# EUROPÄISCHE PATENTSCHRIFT

(11) **EP 0 671 570 B1**
(45) Veröffentlichungstag und Bekanntmachung des Hinweises auf die Patenterteilung: **05.08.1998**
(21) Anmeldenummer: 94117515.0
(22) Anmeldetag: 07.11.1994
(51) Int. Cl.: F16D 3/76, F16F 15/124

(54) **Drehelastische Kupplung**
Rotational flexible coupling
Accouplement élastique rotatif

(30) Priorität: 12.03.1994 DE 4408474
(43) Veröffentlichungstag der Anmeldung: 13.09.1995
(73) Patentinhaber: Firma Carl Freudenberg, 69469 Weinheim (DE)
(72) Erfinder: Hamaekers, Arno, D-69517 Gorxheimertal (DE); Olbrich, Andreas, D-64756 Mossautal (DE)

(56) Entgegenhaltungen:
- DE-A- 4 018 596
- DE-C- 4 400 564
- DE-C- 4 404 311
- FR-A- 1 307 244
- US-A- 2 937 514
- US-A- 2 999 374

## Beschreibung

Die Erfindung betrifft eine drehelastische Kupplung mit einer Rotationsachse, umfassend einen ersten Ring und einen zweiten Ring, die einander mit radialem Abstand umschließen, wobei in dem durch den Abstand gebildeten Ringspalt zumindest ein ringförmig ausgebildeter erster Federkörper aus gummielastischem Werkstoff angeordnet ist und wobei an zumindest einem der Ringe eine Riemenscheibe mittels eines zweiten Federkörpers aus gummielastischem Werkstoff relativ drehelastisch festgelegt und an zumindest einem der Ringe mittels eines Gleitlagers in radialer Richtung abgestützt ist.

Eine solche Kupplung (vgl. den Oberbegriff des Anspruchs 1) ist aus der DE 40 18 596 C2 bekannt. Die Kupplung ist als Torsionsschwingungsdämpfer ausgebildet, wobei die Ringe in radialer Richtung mittels einer separat erzeugten und nachträglich montierten Gleitlager-Buchse aufeinander abgestützt sind. Durch die radial ineinanderliegende Anordnung der Ringe und der Riemenscheibe ergeben sich kompakte Abmessungen, insbesondere eine geringe axiale Baulänge der Kupplung.

Im älteren Recht gemäß der am 16.08.95 veröffentlichten EP 0 667 468 A1 ist ein Torsionsschwingungsdämpfer beschrieben und gezeigt, mit einer Rotationsachse, umfassend einen ersten und einen zweiten Ring, die einander mit radialem Abstand umschließen, wobei in dem durch den Abstand gebildeten Ringspalt zumindest ein ringförmig ausgebildeter erster Federkörper aus elastomerem Werkstoff angeordnet ist und wobei an zumindest einem der Ringe eine Riemenscheibe mittels eines zweiten Federkörpers aus elastomerem Werkstoff relativ drehelastisch gelagert und an zumindest einem der Ringe mittels eines Gleitlagers zumindest in radialer Richtung abgestützt ist. Das Gleitlager ist als Führungsring ausgebildet und besteht aus einem gummielastischen Werkstoff. In den Führungsring sind verschleißreduzierende und formstabilisierende Teilkörper eingelagert.

Der Erfindung liegt die Aufgabe zugrunde, eine Kupplung der vorbekannten Art derart weiter zu entwickeln, daß sich bei gleichbleibend guter Funktionsfähigkeit eine in fertigungstechnischer Hinsicht einfachere Konstruktion ergibt, die kostengünstiger herstellbar ist.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, daß das Gleitlager aus elastomerem Werkstoff besteht und einstückig ineinander übergehend mit dem ersten oder dem zweiten Federkörper ausgebildet ist und daß das Gleitlager und der einstückig angeformte erste oder zweite Federkörper durch voneinander abweichende, an den jeweiligen Anwendungsfall angepaßte Werkstoffe gebildet sind.

Die Herstellung der Kupplung ist bei einer derartigen Ausgestaltung dadurch vereinfacht, daß der erste und der zweite Federkörper sowie das Gleitlager in einem Arbeitsgang gemeinsam vulkanisiert werden können. Die Herstellung der Kupplung ist durch ihren teilearmen Aufbau vereinfacht und die Verwendung eines separat erzeugten Gleitlagers und dessen Montage in die Kupplung sind entbehrlich. Zur Erzielung guter Gebrauchseigenschaften der Kupplung hinsichtlich einer wirkungsvollen Dämpfung von Torsionsschwingungen einerseits und einer präzisen Lagerung der Riemenscheibe an einem der beiden Ringe andererseits, ist es erforderlich, die elastomeren Werkstoffe diesen Erfordernissen anzupassen.

Die dem Gleitlager relativ verdrehbar zugeordnete Oberfläche des angrenzenden Rings ist mit einer reibungsverringernden Oberflächenbeschichtung versehen. Die Oberflächenbeschichtung kann beispielsweise durch eine PTFE-Schicht gebildet sein, die auf die Oberfläche des Ringes aufgesprüht oder als Folie aufgeklebt ist. Eine davon abweichende Ausgestaltung kann darin bestehen, daß das Gleitlager und/oder die Oberfläche auf den einander zugewandten Seiten mit insgesamt zumindest einer mit Schmiermittel gefüllten Schmiermitteltasche versehen sind. Als Schmiermittel kann beispielsweise eine Fettfüllung vorgesehen sein, die den Reibungskoeffizient zwischen den beiden relativ zueinander beweglichen Teile deutlich herabsetzt und dadurch die Abriebbeständigkeit des Gleitlagers wesentlich verbessert.

Nach einer anderen Ausgestaltung kann das Gleitlager auf der Innenseite des ersten Rings festgelegt sein und sich relativ verdrehbar gegenüber der Riemenscheibe abstützen.

Die Riemenscheibe kann ein in axialer Richtung geöffnetes U-förmiges Profil aufweisen und die Axialvorsprünge des ersten und zweiten Rings stirnseitig umgreifen. Eine derartige Ausgestaltung bewirkt, daß die Federkörper und das Gleitlager im wesentlichen innerhalb einer Radialebene angeordnet sind und sich dadurch Axialkräfte während der bestimmungsgemäßen Verwendung von der Kupplung in besonders günstiger Weise fernhalten lassen. Durch die in axialer Richtung überlappende Anordnung der Federkörper und des Gleitlagers ergeben sich kompakte Abmessungen der Kupplung in axialer Richtung.

Zur verbesserten Abstützung der Ringe und der Riemenscheibe relativ zueinander in axialer Richtung kann das Gleitlager den zweiten Ring auf der der Riemenscheibe zugewandten Seite umgreifen und ein Axialgleitlager bilden. Das Axialgleitlager ist bevorzugt einstückig mit dem Gleitlager ausgebildet und zwischen der stirnseitigen Begrenzung des Axialvorsprungs und der inneren Stirnseite der U-förmigen Riemenscheibe angeordnet.

Zur Erzielung einer besseren Verkrallung des Gleitlagers mit dem einstückig ausgebildeten, benachbarten Federkörper, kann der Steg, der vom Federkörper und dem angeformten Gleitlager umschlossen ist, Durchbrechungen aufweisen, die sich im wesentlichen in radialer Richtung erstrecken und vom elastomeren Werkstoff des Gleitlagers und/oder des angrenzenden Federkörpers durchdrungen sind. Dadurch ergibt sich eine formschlüssige Festlegung des Elastomers am Axialvorsprung. Die Dauerhaltbarkeit der Kupplung wird dadurch positiv beeinflußt.

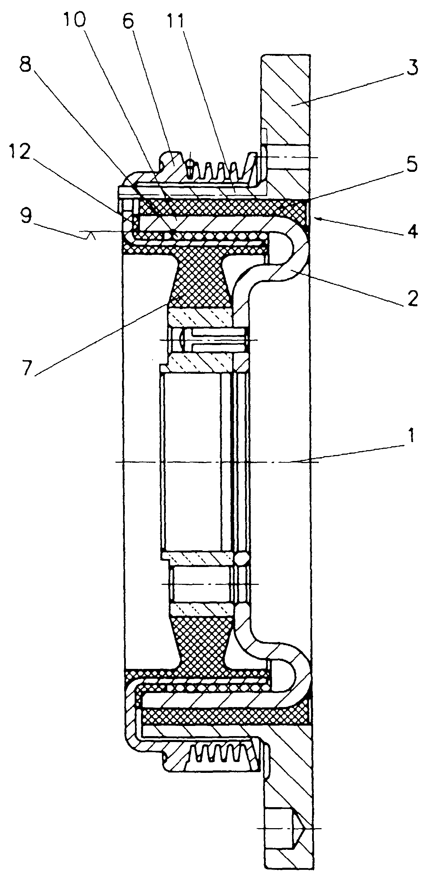

Ein Ausführungsbeispiel der erfindungsgemäßen drehelastischen Kupplung ist in der Zeichnung dargestellt und wird im folgenden näher beschrieben.

In dem Ausführungsbeispiel ist eine drehelastische Kupplung gezeigt, die einen ersten und einen zweiten Ring 2, 3 umfaßt, die eine gemeinsame Rotationsachse 1 umschließen und einander konzentrisch mit radialem Abstand zu geordnet sind. Der erste Ring 2 ist als topfförmiger Nabenring ausgebildet und wird außenumfangsseitige vom zweiten Ring 3, der den Schwungring bildet, umschlossen. Zwischen dem ersten Ring 2 und dem zweiten Ring 3 ist ein erster Federkörper 5 angeordnet, der die beiden Ringe 2, 3 adhäsiv miteinander verbindet. Außerdem umfaßt die Kupplung eine in axialer Richtung U-förmig geöffnete Riemenscheibe 6, die die offenen Stirnseiten der Axialvorsprünge 10, 11 umschließt. Die Abstützung der Riemenscheibe 6 erfolgt durch einen zweiten Federkörper 7, der sich im wesentlichen in radialer Richtung erstreckt und auf dem ersten Ring 2 drehelastisch befestigt ist. Um eine gute Führung der Riemenscheibe zu gewährleisten und Taumelbewegungen zuverlässig auszuschließen, ist die Riemenscheibe 6 innenseitig auf der dem zweiten Federkörper 7 abgewandten Seite durch ein Gleitlager 8 auf der Innenseite des topfförmigen ersten Rings 2 abgestützt. Das Gleitlager 8 und der zweite Federkörper 7 sind einstückig ineinander übergehend ausgebildet und bestehen aus voneinander abweichenden elastomeren Werkstoffen. Der zweite Federkörper 7 weist eine relativ größere Nachgiebigkeit auf, während das Gleitlager 8 zur weitgehenden Vermeidung abrasiven Verschleißes vergleichsweise härter ausgebildet ist. Das Gleitlager 8 ist einstückig ineinander übergehend mit einem Axialgleitlager 12 verbunden, das zwischen dem offenen Ende des Axialvorsprungs 10 des ersten Rings 2 und dem Boden der Riemenscheibe 6 unter axialer Vorspannung angeordnet ist.

## Patentansprüche

1. Drehelastische Kupplung mit einer Rotationsachse (1), umfassend einen ersten Ring (2) und einen zweiten Ring (3), die einander mit radialem Abstand umschließen, wobei in dem durch den Abstand gebildeten Ringspalt (4) zumindest ein ringförmig ausgebildeter erster Federkörper (5) aus gummielastischem Werkstoff angeordnet ist und wobei an zumindest einem der Ringe (2) eine Riemenscheibe (6) mittels eines zweiten Federkörpers (7) aus gummielastischem Werkstoff relativ drehelastisch festgelegt und an zumindest einem der Ringe (2) mittels eines Gleitlagers (8) in radialer Richtung abgestützt ist, dadurch gekennzeichnet, daß das Gleitlager (8) aus elastomerem Werkstoff besteht und einstückig ineinander übergehend mit dem ersten oder dem zweiten Federkörper (5, 7) ausgebildet ist, daß das Gleitlager (8) und der einstückig angeformte erste oder zweite Federkörper (5, 7) durch voneinander abweichende, an den jeweiligen Anwendungsfall angepaßte Werkstoffe gebildet sind und daß die dem Gleitlager (8) relativ verdrehbar zugeordnete Oberfläche (9) des angrenzenden Rings (2) mit einer reibungsverringernden Oberflächenbeschichtung versehen ist.

2. Kupplung nach Anspruch 1, dadurch gekennzeichnet, daß die Oberflächenbeschichtung durch eine PTFE-Schicht gebildet ist.

3. Kupplung nach einem der Ansprüche 1 oder 2, dadurch gekennzeichnet, daß das Gleitlager (8) und/ oder die Oberfläche (9) auf den einander zugewandten Seiten mit insgesamt zumindest einer mit Schmiermittel gefüllten Schmiermitteltasche versehen sind.

4. Kupplung nach einem der Ansprüche 1 bis 3, dadurch gekennzeichnet, daß die Riemenscheibe (6) ein in axialer Richtung geöffnetes U-förmiges Profil aufweist und die Axialvorsprünge (10, 11) des ersten und zweiten Rings (2, 3) stirnseitig umgreift.

5. Kupplung nach einem der Ansprüche 1 bis 4, dadurch gekennzeichnet, daß das Gleitlager (8) den zweiten Ring (3) auf der der Riemenscheibe (6) zugewandten Seite zumindest teilweise umgreift und ein Axialgleitlager (12) bildet.

## Claims

1. A torsionally elastic coupling having an axis of rotation (1), comprising a first ring (2) and a second ring (3), which enclose one another with radial clearance, at least one first spring body (5) of annular design and made of elastomeric material being arranged in the annular gap (4) formed by the clearance, and a belt pulley (6) being secured in a relatively torsionally elastic manner to at least one of the rings (2) by means of a second spring body (7) made of elastomeric material and being supported in the radial direction on at least one of the rings (2) by means of a sliding bearing (8), characterized in that the sliding bearing (8) is made of elastomeric material and is designed so as to merge in one piece with the first or the second spring body (5, 7), in that the sliding bearing (8) and the first or second spring body (5, 7) integrally formed in one piece are formed by materials which differ from one another and are adapted to the respective application, and in that that surface (9) of the adjacent ring (2) which is assigned to the sliding bearing (8) in a relatively rotatable manner is provided with a friction-reducing surface coating.

2. A coupling according to claim 1, characterized in that the surface coating is formed by a PTFE layer.

3. A coupling according to either of claims 1 and 2, characterized in that the sliding bearing (8) and/or the surface (9), on the sides facing one another, are provided with a total of at least one lubricant pocket, which is filled with lubricant.

4. A coupling according to any one of claims 1 to 3, characterized in that the belt pulley (6) has a U-shaped profile open in the axial direction and encloses the axial projections (10, 11) of the first and second ring (2, 3) at the end face.

5. A coupling according to any one of claims 1 to 4, characterized in that the sliding bearing (8) at least partly encloses the second ring (3) on the side facing the belt pulley (6) and forms an axial sliding bearing (12).

## Revendications

1. Accouplement élastique rotatif avec un axe de rotation (1), comprenant une première bague (2) et une seconde bague (3) qui s'entourent mutuellement avec une distance radiale, au moins un premier corps élastique (5) de forme annulaire en gomme élastique étant situé dans la fente annulaire (4) formée par la distance et une poulie (6) étant fixée de manière relativement élastique et rotative sur au moins une des bagues (2) au moyen d'un second corps élastique (7) en gomme élastique et étant appuyée sur au moins une des bagues (2), dans la direction radiale, au moyen d'un palier lisse (8), caractérisé en ce que le palier lisse (8) est fait d'une matière élastomère et est exécuté de manière à se confondre avec le premier ou le second corps élastique (5, 7), en ce que le palier lisse (8) et le premier ou second corps élastique (5, 7) solidaire avec lui sont formés par des matériaux différents l'un de l'autre et adaptés au cas d'utilisation respectif, et en ce que la surface (9) de la bague (2) contiguë associée au palier lisse (8) de manière à pouvoir subir une torsion relative est pourvue d'un revêtement superficiel réduisant le frottement.

2. Accouplement selon la revendication 1, caractérisé en ce que le revêtement superficiel est formé par une couche de PTFE.

3. Accouplement selon l'une des revendications 1 ou 2, caractérisé en ce que le palier lisse (8) et/ou la surface (9) est/sont pourvu(e)/s, sur les côtés tournés l'un vers l'autre, d'au moins un creux de graissage au total, rempli de lubrifiant.

4. Accouplement selon l'une des revendications 1 à 3, caractérisé en ce que la poulie (6) a un profil en forme de U ouvert dans la direction axiale et entoure les saillies axiales (10, 11) des première et seconde bagues (2, 3) sur leur côté frontal.

5. Accouplement selon l'une des revendications 1 à 4, caractérisé en ce que le palier lisse (8) entoure la seconde bague (3), au moins partiellement, sur le côté dirigé vers la poulie (6) et forme un palier lisse axial (12).
